# EUROPÄISCHE PATENTSCHRIFT

(11) **EP 0 638 357 B1**
(45) Veröffentlichungstag und Bekanntmachung des Hinweises auf die Patenterteilung: **27.10.1999**
(21) Anmeldenummer: 94111763.2
(22) Anmeldetag: 28.07.1994
(51) Int. Cl.: B01J 19/24, C08G 2/30, C08G 2/10

(54) **Vorrichtung zur kontinuierlichen Herstellung von Polyacetalen und ihre Verwendung**
Apparatus for continuously producing polyacetals and its use
Dispositif pour produire en continu des polyacétals ainsi que son utilisation

(30) Priorität: 13.08.1993 DE 4327246
(43) Veröffentlichungstag der Anmeldung: 15.02.1995
(73) Patentinhaber: Ticona GmbH, 65451 Kelsterbach (DE)
(72) Erfinder: Hoffmockel, Michael, Dr., D-65527 Niedernhausen (DE); Mück, Karl-Friedrich, Dr., D-65207 Wiesbaden (DE); Schlaf, Helmut, Dr., D-65779 Kelkheim (DE)

(56) Entgegenhaltungen:
- EP-A- 0 028 499
- EP-A- 0 080 656
- EP-A- 0 389 227
- DE-A- 1 770 281

## Beschreibung

Die Erfindung betrifft eine Vorrichtung zur kontinuierlichen Herstellung und weitgehend Endgruppenstabilisierung von Polyacetalen in homogener Phase und ihre Verwendung.

Ein Verfahren zur Herstellung von Polyacetalen unter Verwendung dieser Vorrichtung wird in der am 13. August 1993 eingereichten deutschen Patentanmeldung DE-A-43 27 245 beschrieben, die der europäischen Patentanmeldung zu EP-A-0 638 599 entspricht.

Es sind zahlreiche Verfahren zur Herstellung von Oxymethylenhomo- und Oxymethylencopolymeren aus Formaldehyd oder cyclischen Oligomeren des Formaldehyds, insbesondere Trioxan, in Gegenwart von kationisch wirksamen Initiatoren bekannt. Die kontinuierliche Polymerisation der Monomeren im technischen Maßstab ist beispielsweise beschrieben in den Patentschriften US-A-3 027 352, US-A-3 803 094, DE-A-1 161 421, DE-A-495 228, DE-A-1 720 358 und DE-A-30 18 898. Als Polymerisationsreaktoren sind u. a. beschrieben Kneter, Extruder, Walzen und Bänder. Gemeinsames Merkmal dieser Verfahren ist ein während der Polymerisation stattfindender Phasenübergang von gasförmigen bzw. flüssigen Monomeren zum teilkristallinen festen Polymeren. Dies führt zu Problemen beim Abführen der frei werdenden Polymerisations- und Kristallisationswärme und verursacht in Folge Umsatzeinbußen.

In der Patentschrift EP-B-0 080 656 ist ein Verfahren zur kontinuierlichen Massepolymerisation von Trioxan in homogener, flüssiger Phase bei Temperaturen oberhalb von 135°C beschrieben. Diese Verfahrensführung vermeidet einen Phasenübergang während der Polymerisation. Als Polymerisationsreaktoren werden außer den oben erwähnten Apparaturen auch Strömungsrohre mit und ohne statische Mischer angegeben. Bezüglich des Desaktivierungsreaktors ist nur die Verwendung von Extrudern erwähnt. Weiterhin wird für den Desaktivierungsreaktor angegeben, daß er räumlich so vom Polymerisationsreaktor getrennt ist, daß ein Eindringen des Desaktivators in den Polymerisationsreaktor sicher ausgeschlossen wird. Dies wird durch Einbauten wie Engpässe und/oder Stauelemente erreicht. Es muß daraus gefolgert werden, daß der Desaktivator erst nach den Abtrenneinrichtungen eindosiert wird.

Die Aufgabe der vorliegenden Erfindung bestand darin, einen Reaktor zu konzipieren, in dem die Herstellung von Polyacetalhomo- und -copolymeren vereinfacht durchgeführt werden kann. Sie wurde gelöst durch einen bestimmten Reaktortyp, bei dem die einzelnen Verfahrenszonen, d. h. das Mischen der Monomeren und des Initiators, die Polymerisationsreaktion, die Desaktivierung und der weitgehende hydrolytische Abbau der instabilen Kettenenden oder der Endgruppenverschluß, fließend ineinander übergehen.

Die Erfindung betrifft somit einen Reaktor zur Herstellung von Polyacetalen in Form eines mit statischen Mischelementen ausgestatteten Strömungsrohres,
- der aus einer Mischungszone, in der die Monomeren und der Initiator gemischt werden, einer Polymerisationszone, einer Desaktivatoreinmischzone und einer Desaktivierungs- und Stabilisierungszone aufgebaut ist, wobei die einzelnen Verfahrenszonen fließend ineinander über gehen,
- bei dem die statischen Mischelemente hintereinander angeordnet sind, ihre Länge und ihr Durchmesser dem einzelnen Verfahrensschritt angepaßt und sie nicht durch eingebaute Stauelemente oder Engpässe getrennt sind, und
- bei dem die Verweilzeit in der Mischungszone 0,1 bis 10 Sekunden, in der Polymerisationszone 0,1 bis 10 Minuten und in der Desaktivierungs- und Stabilisierungszone 1 bis 10 Minuten beträgt.

Der Reaktor gemäß der Erfindung ist vorzugsweise aus einzelnen Schüssen aufgebaut, so daß eine hohe Flexibilität des Reaktoraufbaus erreicht wird. Ein weiterer Vorteil besteht darin, daß der Reaktor keine mechanisch bewegten Teile enthält und somit wenig störanfällig ist. Der schußweise zusammengebaute Reaktor ist über die gesamte Länge mit statischen Mischelementen bestückt. Als statische Mischer sind beispielsweise SMX- oder SMR-Mischer der Firma SULZER (Winterthur, Schweiz), Kenics-Mischer (Chemineer Clevepad Ltd., West Meadows, England) oder andere statische Mischelemente einsetzbar. Der innere Durchmesser und die Länge des einzelnen Reaktorschusses ist abhängig vom gewünschten Durchsatz, vom dort durchzuführenden Verfahrensschritt und von der Viskosität des in dem Abschnitt erzeugten Produkts. Durch diese Anordnung des Reaktors wird ein enges Verweilzeitspektrum des Reaktionsgutes ermöglicht, das für eine hohe Produktqualität notwendig und erforderlich ist.

Der Reaktor gemäß der Erfindung ist aus vier Zonen aufgebaut, der Mischungszone, in der zwei niederviskose Bestandteile, die Monomeren und der Initiator gemischt werden, die Polymerisationszone, in der die Polymerisation stattfindet, die Desaktivatoreinmischzone, in der die hochviskose Polymerschmelze mit niederviskosem Desaktivator versetzt wird und die Desaktivierungs- und Stabilisierungszone, in der die Desaktivierung und die Stabilisierung vorgenommen und vervollständigt werden. Die Stabilisierung wird durch den hydrolytischen Abbau der instabilen Kettenenden bei Polyacetalcopolymeren bzw. einem Endgruppenverschluß bei Polyacetalhomopolymeren ermöglicht. Die einzelnen Verfahrenszonen gehen fließend ineinander über. Das Ende der Polymerisationszone wird festgelegt durch die Stelle der Zugabe des Desaktivators. Vorzugsweise wird eine rasche Einmischung des Desaktivators ermöglicht, wenn man in dieser Zone kurzfristig die Scherung erhöht. Dies kann erreicht werden durch eine Verringerung des Reaktordurchmessers, wobei die Eindosierung zu Beginn der Verjüngung erfolgt, oder durch anders gestaltete statische Mischelemente.

Um die in den einzelnen Verfahrenszonen einzuhaltenden Verweilzeiten einzustellen, ist es erforderlich, die Länge und den Durchmesser der einzelenen Mischelemente den betreffenden Verfahrensschritten anzupassen.

In der Initiierungszone sind die statischen Mischelemente und der Reaktordurchmesser so zu dimensionieren, daß maximal eine Verweilzeit von 0,1 bis 10 Sekunden, vorzugsweise 0,5 bis 5 und insbesondere 0,5 bis 2 Sekunden eingehalten wird, ohne daß eine Polymerisation stattfindet. Die Zeit soll allein dazu ausreichen, um eine einwandfreie Mischung der Ausgangsmaterialien zu gewährleisten.

In der Polymerisationszone sind die statischen Mischelemente und der Reaktordurchmesser so auszugestalten, daß die Polymerisationsverweilzeit 0,1 bis 10 Minuten, bevorzugt 0,3 bis 5 Minuten und insbesondere 0,5 bis 2 Minuten beträgt. Unter diesen Bedingungen sind Umsätze von 60 bis 80 % erreichbar.

Die Verweilzeit in der sich anschließenden Desaktivierungs- und Stabilisierungszone liegt bevorzugt bei 1 bis 10 Minuten und insbesondere bei 2 bis 5 Minuten.

Unter Stabilisierung ist der hydrolytische Abbau der instabilen Kettenenden bei den Polyacetalcopolymeren bzw. der Endgruppenverschluß bei den Polyacetalhomopolymeren zu verstehen.

Der Druck im Reaktor, im allgemeinen ≥ 15 bar, wird über ein Drosselventil am Reaktorausgang eingestellt, über das das Produkt auch auf Atmosphärendruck entspannt wird, wobei es spontan erstarrt.

Das den Reaktor verlassende Polymerisat muß von Restmonomeren, Abbauprodukten wie Formaldehyd, sowie Amin und Wasser befreit werden. Dies geschieht - wie bekannt - zum Beispiel in einer Flashkammer und anschließender Entgasungsextrusion. Gegebenenfalls kann bei den Polyacetalcopolymeren ein weiterer Stabilisierungsschritt auf dem Entgasungsextruder vorgenommen werden.

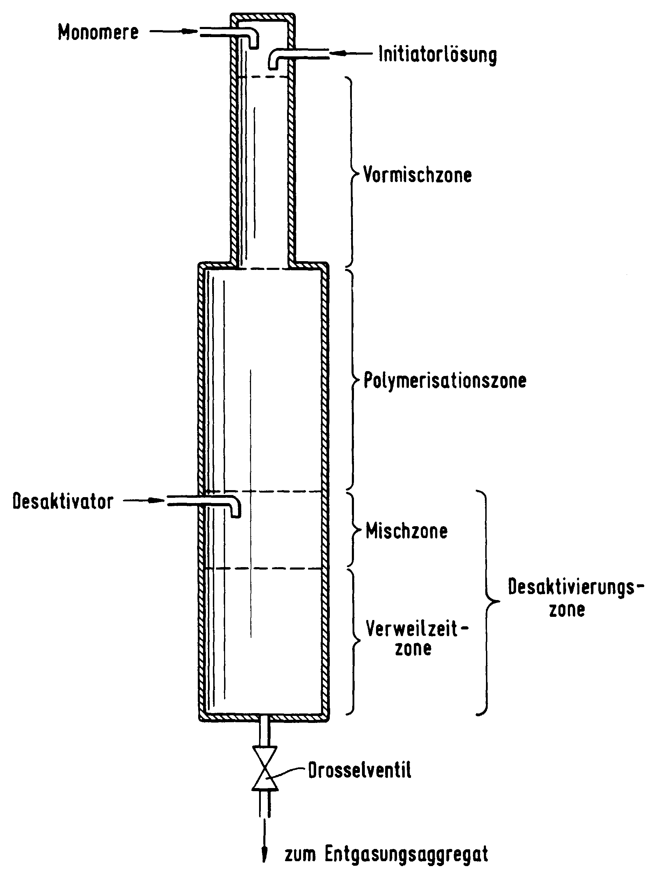

Eine Schemazeichnung des erfindungsgemäßen Reaktors zeigt die Figur.

## Patentansprüche

1. Reaktor zur Herstellung von Polyacetalen in Form eines mit statischen Mischelementen ausgestatteten Strömungsrohres, dadurch gekennzeichnet, daß
- der Reaktor aus einer Mischungszone, in der die Monomeren und der Initiator gemischt werden, einer Polymerisationszone, einer Desaktivatoreinmischzone und einer Desaktivierungs- und Stabilisierungszone aufgebaut ist, wobei die einzelnen Verfahrenszonen fließend ineinander über gehen,
- die statischen Mischelemente hintereinander angeordnet, ihre Länge und ihr Durchmesser dem einzelnen Verfahrensschritt angepaßt und sie nicht durch eingebaute Stauelemente oder Engpässe getrennt sind,
- die Verweilzeit in der Mischungszone 0,1 bis 10 Sekunden, in der Polymerisationszone 0,1 bis 10 Minuten und in der Desaktivierungs- und Stabilisierungszone 1 bis 10 Minuten beträgt.

2. Reaktor nach Anspruch 1, dadurch gekennzeichnet, daß die Verweilzeit in der Desaktivierungs- und Stabilisierungszone 2 bis 5 Minuten beträgt.

3. Reaktor nach Anspruch 1 oder 2, dadurch gekennzeichnet, daß die Verweilzeit in der Polymerisationszone 0,3 bis 5 Minuten beträgt.

4. Reaktor nach einem oder mehreren der Ansprüche 1 bis 3, dadurch gekennzeichnet, daß die Verweilzeit in der Polymerisationszone 0,5 bis 2 Minuten beträgt.

5. Reaktor nach einem oder mehreren der Ansprüche 1 bis 4, dadurch gekennzeichnet, daß die Verweilzeit in der Mischungszone 0,5 bis 5 Sekunden beträgt.

6. Reaktor nach einem oder mehreren der Ansprüche 1 bis 5, dadurch gekennzeichnet, daß dem Reaktor ein Entgasungsaggregat angeschlossen ist.

7. Verwendung eines Reaktor nach einem oder mehreren der Ansprüche 1 bis 6 zur kontinuierlichen Herstellung von Polyacetalen in homogener Phase.

## Claims

1. A reactor for the preparation of polyacetals in the form of a flow tube equipped with static mixing elements, wherein
- the reactor is composed of a mixing zone in which the monomers and the initiator are mixed, a polymerization zone, a deactivator admixing zone and a deactivation and stabilization zone, the individual process zones passing fluidly into one another,
- the static mixing elements are arranged in series, their length and their diameter are adapted to the individual process step and they are not separated by built-in backing-up elements or bottlenecks,
- the residence time in the mixing zone is from 0.1 to 10 seconds, that in the polymerization zone is from 0.1 to 10 minutes and that in the deactivation and stabilization zone is from 1 to 10 minutes.

2. The reactor as claimed in claim 1, wherein the residence time in the deactivation and stabilization zone is from 2 to 5 minutes.

3. The reactor as claimed in claim 1 or 2, wherein the residence time in the polymerization zone is from 0.3 to 5 minutes.

4. The reactor as claimed in one or more of claims 1 to 3, wherein the residence time in the polymerization zone is from 0.5 to 2 minutes.

5. The reactor as claimed in one or more of claims 1 to 4, wherein the residence time in the mixing zone is from 0.5 to 5 seconds.

6. The reactor as claimed in one or more of claims 1 to 5, wherein a devolatilization unit is connected to the reactor.

7. The use of a reactor as claimed in one or more of claims 1 to 6 for the continuous preparation of polyacetals in the homogeneous phase.

## Revendications

1. Réacteur pour la préparation de polyacétals en forme d'un tube d'écoulement équipé d'éléments de mélange statiques, caractérisé en ce que
- le réacteur est constitué d'une zone de mélange, dans laquelle les monomères et l'initiateur sont mélangés, d'une zone de polymérisation, d'une zone de mélange du désactivateur et d'une zone de désactivation et de stabilisation, les zones de procédé individuelles s'enchaînant sans interruption;
- les éléments de mélange statiques sont disposés l'un derrière l'autre, leur longueur et leur diamètre sont adaptés à l'étape de procédé individuelle et ils ne sont pas séparés par des éléments de retenue ou par des étranglements intégrés;
- le temps de séjour vaut 0,1 à 10 secondes dans la zone de mélange, 0,1 à 10 minutes dans la zone de polymérisation et 1 à 10 minutes dans la zone de désactivation et de stabilisation.

2. Réacteur suivant la revendication 1, caractérisé en ce que le temps de séjour dans la zone de désactivation et de stabilisation vaut 2 à 5 minutes.

3. Réacteur suivant la revendication 1 ou 2, caractérisé en ce que le temps de séjour dans la zone de polymérisation vaut 0,3 à 5 minutes.

4. Réacteur suivant une ou plusieurs des revendications 1 à 3, caractérisé en ce que le temps de séjour dans la zone de polymérisation vaut 0,5 à 2 minutes.

5. Réacteur suivant une ou plusieurs des revendications 1 à 4, caractérisé en ce que le temps de séjour dans la zone de mélange vaut 0,5 à 5 secondes.

6. Réacteur suivant une ou plusieurs des revendications 1 à 5, caractérisé en ce qu'un groupe de dégazage est relié au réacteur.

7. Utilisation d'un réacteur suivant une ou plusieurs des revendications 1 à 6, pour la préparation en continu de polyacétals en phase homogène.
